(19) Europäisches Patentamt

European Patent Office

Office européen des brevets

(11) **EP 1 317 830 B1**

(12) **EUROPÄISCHE PATENTSCHRIFT**

(45) Veröffentlichungstag und Bekanntmachung des Hinweises auf die Patenterteilung:
**18.10.2006  Patentblatt 2006/42**

(21) Anmeldenummer: **01967065.2**

(22) Anmeldetag: **28.08.2001**

(51) Int Cl.:
***H04L 27/00*** *(2006.01)*

(86) Internationale Anmeldenummer:
**PCT/DE2001/003353**

(87) Internationale Veröffentlichungsnummer:
**WO 2002/023843 (21.03.2002 Gazette 2002/12)**

(54) **VERFAHREN ZUR ERZEUGUNG VON MOBILKOMMUNIKATIONSSIGNALEN VERSCHIEDENER MOBILFUNKSTANDARDS**

METHOD FOR THE GENERATION OF MOBILE COMMUNICATION SIGNALS OF VARIOUS MOBILE RADIO STANDARDS

PROCEDE DE PRODUCTION DE SIGNAUX DE COMMUNICATION MOBILE DE DIFFERENTES NORMES DE TELEPHONIE MOBILE

(84) Benannte Vertragsstaaten:
**DE FR GB**

(30) Priorität: **14.09.2000  DE 10045547**

(43) Veröffentlichungstag der Anmeldung:
**11.06.2003  Patentblatt 2003/24**

(73) Patentinhaber: **Infineon Technologies AG
81669 München (DE)**

(72) Erfinder: **WENZEL, Dietmar
81549 München (DE)**

(74) Vertreter: **Graf Lambsdorff, Matthias et al
Patentanwälte
Lambsdorff & Lange
Dingolfinger Strasse 6
81673 München (DE)**

(56) Entgegenhaltungen:
**EP-A- 0 847 169          EP-A- 0 940 956
EP-A- 1 041 764          US-A- 6 091 765**

• **FUNDERBURK ET AL: "Asynchronous timing recovery for passband PS-FSE for single-chip V. 32 modems" IEEE GLOBAL TELECOMMUNICATIONS CONFERENCE, 29. November 1993 (1993-11-29) - 2. Dezember 1993 (1993-12-02), Seiten 614-620, XP002188516 New York, US**

**Beschreibung**

Die Erfindung bezieht sich generell auf Signalprozessoren für die Mobilkommunikation und auf entsprechende digitale Verfahren zur Erzeugung von Mobilkommunikations-Sendesignalen. Insbesondere bezieht sich die Erfindung dabei auf derartige Signalprozessoren und Verfahren, bei denen Mobilkommunikations-Sendesignale für unterschiedliche Mobilfunkstandards erzeugt werden und entsprechende digitale Schaltungen auf einem einzigen Chip integriert sind.

Bei dem derzeit in der Mobilkommunikation verwendeten GSM-Standard wird die sogenannte GMSK-(Gaussian Minimum Shift Keying) Modulation eingesetzt, die einen Signalraum mit Signalpunkten verwendet, die eine Phasendifferenz von 180° aufweisen. Dazu wurde der Paketdienst GPRS (General Packet Radio Service) entwickelt, bei dem mit höheren Datenraten gearbeitet werden kann. Als weiterer derzeit benutzter Standard ist der TIA/EIA-136-(IS-136-) Standard bekannt, bei welchem ein π/4-DQPSK-(D-Quarternär-PSK)-Modulationsverfahren für die Erzeugung der Sendesignale eingesetzt wird. Gewissermaßen als Übergangsstandard zwischen GSM und GPRS einerseits und UMTS andererseits wurde der Standard EDGE sowie der zugehörige Paketdienst EGPRS (Enhanced GPRS) definiert. Bei EDGE handelt es sich zwar noch um ein TDMA-Verfahren (Time Division Multiple Access), es wird aber bereits von der GMSK-Modulation auf die 8-PSK-Modulation übergegangen. Bei der 8-PSK-Modulation wird ein Signalraum mit 8 Signalpunkten verwendet, wobei die Phasendifferenz zwischen den einzelnen Signalpunkten 45° beträgt.

Ein generelles Ziel besteht darin, Mobilkommunikationsgeräte zu entwickeln, die für den Betrieb mit mehreren verschiedenen Mobilfunkstandards ausgelegt sind und die demnach in den verschiedenen Mobilfunksystemen benutzt werden können. Ein Problem stellt jedoch hierbei die Tatsache dar, daß die oben beschriebenen Modulationsverfahren unterschiedliche Signaltaktraten benötigen. Dieses Problem wurde bisher - wie beispielsweise in den Basisband-Prozessoren PCI 3700 und PCI 3800 der Firma PrairieComm für GSM und TIA/EIA-136 bzw. für GSM, EDGE und TIA/EIA-136 - dadurch gelöst, daß für jeden Mobilfunkstandard eine separate spezielle Signalverarbeitungsarchitektur verwendet und mit einer auf den entsprechenden Mobilfunkstandard genau abgestimmten Signaltaktrate versorgt wurde. Dies führt jedoch dazu, daß für ähnliche Aufgaben mehrfache Schaltungsblöcke erforderlich sind und mit unterschiedlichen Signaltaktraten versorgt werden müssen. Dies führt in der Regel zu einem erhöhten Bedarf an Bauelementen und an Chipfläche. Der Betrieb mit unterschiedlichen Systemtaktraten erschwert somit die Integration der Funktionen in einem Bauelement. Aufgrund der getrennten Verarbeitung mit unterschiedlichen Taktraten ist es in der Regel auch nicht möglich, die Signale an die Baugruppe zur Umsetzung des Tiefpaßsignals in die trägerfrequente Lage über eine einheitliche Schnittstelle zu übergeben, so daß in diesem Fall mehrere D/A-Umsetzer erforderlich sind.

Die Druckschrift EP-A-0 940 956 beschreibt einen digitalen Basisband-Modulator, dessen Aufbau den Betrieb mit verschiedenen Mobilfunkstandards und entsprechend verschiedenen digitalen Modulationsarten erlaubt. Zu diesem Zweck weist der in der Fig. 5 gezeigte digitale Basisband-Modulator zwei nach dem Symbolaufbauelement geschaltete Signalverarbeitungspfade auf, in denen jeweils ein Interpolator und andere Schaltungsblöcke enthalten sind, mit denen die einkommenden Signale auf ein einheitliches Zeitraster umgesetzt werden.

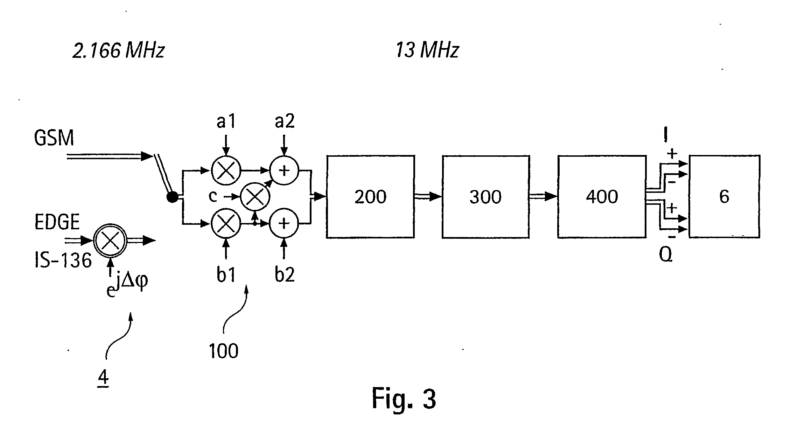

In der Publikation "Asynchronous timing recovery for passband PS-FSE for single-chip V.32 modems" von Funderburk et al. in IEEE GLOBAL TELECOMMUNICATIONS CONFERENCE, 29. November 1993- 2. Dezember 1993, Seiten 614-620, New York, US, wird in dem Abschnitt II. und der Fig. 3 ein Interpolationsfilter in Polyphasenausführung beschrieben.

Der vorliegenden Erfindung liegt somit die Aufgabe zugrunde, einen Signalprozessor bzw. eine Signalverarbeitungsstruktur und ein Verfahren zur digitalen Erzeugung von Mobilkommunikations-Sendesignalen anzugeben, mit welchen auf einem einzelnen Chip verschiedene Mobilfunkstandards mit einem verringerten Bedarf an Bauelementen und Chipfläche unterstützt werden können.

Diese Aufgabe wird mit den kennzeichnenden Merkmalen der unabhängigen Patentansprüche gelöst.

Ein wesentlicher Gedanke der vorliegenden Erfindung besteht darin, für die Signalverarbeitung und/oder D/A-Umsetzung der Sendesignale verschiedener Mobilfunkstandards auf dem Chip nur noch eine einzige, systemunabhängige Taktrate zu generieren und entsprechend nur noch genau einen Taktfrequenzgenerator zu verwenden.

Wenn die in den von dem Signalprozessor unterstützten Mobilfunkstandards vorgesehenen Zeitraster bzw. Schrittgeschwindigkeiten unterschiedlich sind, was meistens der Fall ist, muß dann eine Umsetzung/Umrechnung der standardspezifischen Sendesignale in ein einheitliches Zeitraster durchgeführt werden. Diese Umsetzung erfolgt durch mindestens einen Interpolator, wie einen steuerbaren Interpolator, im Signalverarbeitungspfad. Der Interpolator ist beispielsweise ein asynchroner, linearer Interpolator, der beispielsweise durch einen Phasenakkumulator angesteuert wird.

Ein derartiger sogenannter Polyphaseninterpolator ist in der Dissertation mit dem Titel "Ein digitaler Fernseh- und Tonmodulator für digitale Breitbandverteilnetze" von Dietmar Wenzel beschrieben worden, welche am Institut für Nachrichtenübertragung der Universität Stuttgart angefertigt wurde und im VDI-Verlag, Düsseldorf, 1999, in der Reihe 10 Informatik/Kommunikation der Fortschritt-Berichte unter Nr. 617 (ISBN 3-18-361710-2) (nachfolgend mit "Wenzel" bezeichnet) erschienen ist. Dem in dieser Arbeit entwickelten asynchronen Abtastratenumsetzer lag das Problem zugrunde, daß bei der Anordnung von Fernsehkanälen im Frequenzmultiplex mit wachsender Kanalzahl die benötigte Bandbreite und damit auch die erforderliche Abtastfrequenz ansteigt. Vor der Addition der einzelnen frequenzverschobenen Signale und zu übertragenden Signale muß daher eine Erhöhung und Angleichung der Abtastrate stattfinden. Zu diesem Zweck wurden die genannten Interpolatoren entwickelt. In der vorliegenden Anmeldung werden diese Interpolatoren dafür verwendet, um mit Hilfe einer gemeinsamen Systemtaktfrequenz die Datenrate des jeweiligen Mobilfunkstandards in ein für alle Mobilfunkstandards einheitliches Zeitraster umzusetzen.

Der Interpolator weist ein steuerbares Interpolationsverhältnis auf und seine Architektur ist vorzugsweise von einfachem Aufbau (bspw. linearer Interpolator), wobei dennoch viele Funktionsblöcke gemeinsam für die unterschiedlichen Signale genutzt werden können.

Mindestens ein im Signalverarbeitungspfad vorhandener Interpolator kann beispielsweise durch einen sogenannten FIR-(Finite impulse response) Interpolationsfilter gebildet sein. Diese Filter können als sogenannte M-tel-Bandfilter ausgebildet sein, die eine Interpolation um den Faktor M = L durchführen, wobei L die Anzahl Zweige in der Filterstruktur des Polyphaseninterpolators ist.

Die Erfindung vermeidet somit die Notwendigkeit der Anordnung einer der Anzahl der unterstützten Mobilfunkstandards entsprechenden Anzahl von Taktfrequenzgeneratoren, da die jeweils verwendete Signalverarbeitungsstruktur mit einem einheitlichen Systemtakt versorgt werden kann. Darüberhinaus können verschiedene andere Baugruppen, etwa zur Abtastratenumsetzung, spektralen Rauschformung (Noise-Shaping), Vorauskorrektur von Trägerfrequenzoffset, Symbolphasenfehler, I/Q-Phasen- sowie Verstärkungsfehler, Amplituden- und Gleichanteilskorrektur für alle Signalverarbeitungspfade gemeinsam genutzt werden.

Gegebenenfalls können auch Teile der für die Modulatoren erforderlichen Schaltungsteile, wie beispielsweise FIR-Filter zur Impulsformung gemeinsam genutzt werden.

Ein weiterer Vorteil der Erfindung ist, daß die gemeinsame _ Systemtaktfrequenz kein kleinstes gemeinsames Vielfaches der jeweiligen mobilfunkstandard-spezifischen Taktfrequenzen oder über rationale Teilerfaktoren aus allen diesen ableitbar sein muß.

Da die Signale in einem einheitlichen Zeitraster vorliegen, wird jeweils für die I- und Q-Komponente nur ein einziger D/A-Umsetzer in Senderichtung benötigt und die Signale können über ein und dieselbe Schnittstelle an die Baugruppen zur Umsetzung des Tiefpaßsignals in die trägerfrequente Lage ausgegeben werden. Dabei kann die Schnittstelle zwei analoge oder digitale Signale in Form einer Normal- und Quadraturkomponente oder Amplituden- und Phasenkomponente beinhalten.

Die Erfindung kann insbesondere für die Mobilfunkstandards GSM, EDGE und TIA/EIA-136 oder Mischformen oder Teilkombinationen daraus verwendet werden.

Im folgenden wird ein Ausführungsbeispiel der Erfindung anhand der Figuren näher erläutert. Es zeigen :

Fig.1        ein schematisches Blockschaltbild eines erfindungsgemäßen, mehrere Mobilfunkstandards unterstützenden Signalprozessors;

Fig.2A,B,C   Signalverarbeitungspfade für den GMSK-Standard (A), den EDGE-Standard (B) und den IS-136-Standard (C);

Fig.3        ein schematisches Blockschaltbild eines von dem GMSK- und dem EDGE-Standard sowie dem IS-136-Standard gemeinsam genutzten Endabschnitts des Signalverarbeitungspfads;

Fig.4A,B,C   Betragsfrequenzgang und Toleranzschema eines 11-tel-Bandfilters mit 55 Koeffizienten (A), ein Interpolator für nichtrationale Abtastratenverhältnisse mit Phasenakkumulator (B) und ein Phasendecoder mit 16 bit Wortbreite für 32 Polyphasen.

In dem Ausführungsbeispiel wird ein Signalprozessor angegeben, welcher die drei Mobilfunkstandards GSM, EDGE und TIA/EIA-136 unterstützt und dabei einen einzigen Taktfrequenzgenerator der Systemtaktfrequenz 104 MHz aufweist. Die Mobilfunkstandards arbeiten dabei mit den folgenden, eingangs bereits erwähnten und an sich bekannten Modulationsverfahren und Datenraten:

| Standard | Modulation | Datenrate |
|---|---|---|
| GSM | GMSK | 270,83 kbit/s |
| EDGE | $3\pi/8$-8-PSK | 812,5 kbit/s |
| TIA/EIA-136 | $\pi/4$-DQPSK | 48,6 kbit/s |

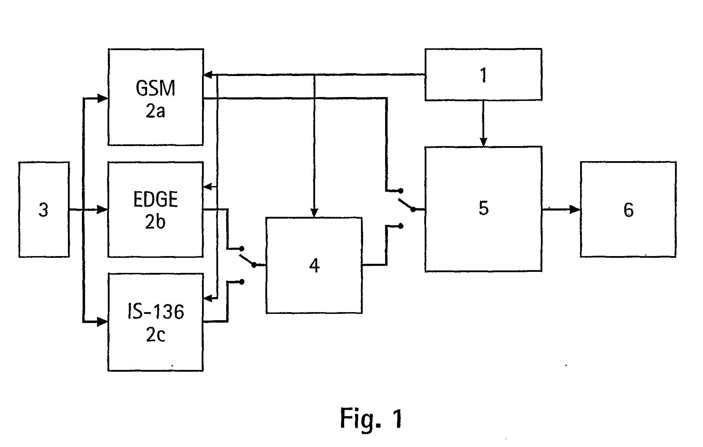

In der Fig.1 sind die einzelnen Funktionsblöcke des Signalprozessors dargestellt, die mit der einheitlichen von einem Taktfrequenzgenerator 1 erzeugten Systemtaktfrequenz von 104 MHz betrieben werden sollen. Von einem RAM-Pufferspeicher 3 werden den Modulatoren 2a-c für die oben genannten Mobilfunkstandards die zu modulierenden Signaldaten zugeführt. Nicht eingezeichnet ist, daß die unterschiedlichen Modulatoren 2a-c gegebenenfalls teilweise auf dieselbe Hardware zurückgreifen, obwohl sie unterschiedliche Funktionalität aufweisen. Die GSM- und die EDGE-Signale basieren auf demselben standardisierten Zeitraster, während der IS-136-Standard davon abweicht.

In den Signalpfaden für den EDGE- und den IS-136-Standard werden die von den Modulatoren abgegebenen Signale einem Phasen-/Frequenz-Korrekturschaltkreis 4 zugeführt, welcher ebenfalls mit der Systemtaktfrequenz von 104 MHz beaufschlagt wird. Aus diesem werden die Signale anschließend einem D/A-Umsetzerschaltkreis 5 zugeführt. In diesem Schaltkreis wird ebenfalls die spektrale Rauschformung (Noise Shaping), die Abtastratenumsetzung und die Vorauskorrektur von Trägerfrequenzoffset, Symbolphasenfehler, I/Q-Phasen- sowie Verstärkungsfehler, Amplituden- und Gleichanteilskorrektur von allen Signalverarbeitungspfaden gemeinsam genutzt. Da bei dem GMSK-Verfahren eine Phasen-/Frequenzkorrektur nicht vorgenommen werden muß, wird in diesem Signalpfad der Phasen-/Frequenz-Korrekturschaltkreis 4 nicht genutzt und die von dem GSM-Modulator 2a gelieferten Signale werden direkt dem D/A-Umsetzerschaltkreis 5 zugeführt. Anschließend erfolgt für alle Signalverarbeitungspfade in einem RF-Modulatorschaltkreis 6 die Umsetzung des Tiefpaßsignals in die trägerfrequente Lage.

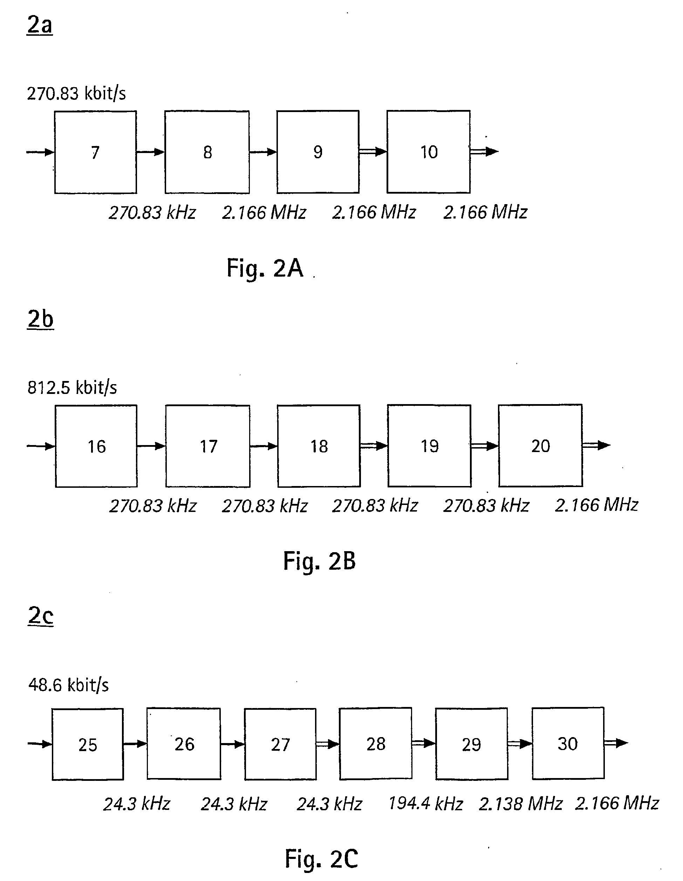

In den Figuren 2A-C sind die prinzipiellen Funktionsblöcke für die drei verschiedenen Modulatoren 2a-c der Fig.1 der Mobilfunkstandards dargestellt. Jeweils ein Interpolationsfilter 8, 20, 28 wird für den Interpolationsfaktor 8 verwendet, welches gleichzeitig die Impulsformung vornimmt. Alle dargestellten Modulatoren haben die gemeinsame Eigenschaft, daß sie ein komplexes digitales Signal mit einer Abtastfrequenz von 2,166 MHz in Form einer I- und Q-Komponente liefern, welches mit dem in Fig.3 gezeigten Schaltkreis weiterverarbeitet wird.

Zur Vereinfachung wurde in dem Ausführungsbeispiel die Systemtaktfrequenz so gewählt, daß bei GSM und EDGE die in den Figuren kursiv dargestellten "virtuellen" Abtastfrequenzen durch ganzzahlige Teilung erreicht werden können. Bei dem IS-136-Modulator 2c ist dies nicht der Fall. Daher wird dort ein zusätzlicher Interpolator eingesetzt, der die Umsetzung auf das gemeinsame Zeitraster von 2,166 MHz vornimmt.

Im einzelnen weist der GMSK-Modulator 2a einen differentiellen Codierer 7, einen FIR-Filter 8 (Interpolator), einen Phasenerzeugungs-Integrator 9 und einen r/φ-I/Q-Umsetzer 10 auf. Der EDGE-Modulator enthält einen Seriell-Parallel-Umsetzer 16 zur Bildung von Dreier-Bitgruppen, eine Symbol-Abbildungsschaltung 17 in Verbindung mit einem Tabellenspeicher, einen Symbolrotations-Schaltkreis 18 für die 3π/8-Rotation, eine Symbol-Erzeugungsschaltung 19 in Verbindung mit einem Tabellenspeicher und eine Impulsformungsschaltung 20 in Verbindung mit einem FIR-Filter (Interpolator) auf. Der IS-136-Modulator weist dagegen einen Seriell-Parallel-Umsetzer 25 zur Bildung von Bitpaaren, einen differentiellen DQPSK-Codierer 26, eine Symbol-Erzeugungsschaltung 27 in Verbindung mit einem Tabellenspeicher und eine Impulsformungsschaltung 28 in Verbindung mit einem FIR-Filter mit 8-facher Aufwärtstastung auf. Die Impulsformungsschaltung liefert somit ein IS-136-Signal mit einer "virtuellen" Abtastfrequenz von 194,4 kHz. Um ein möglichst einfaches Interpolationsfilter zur asynchronen Interpolation auf das Zeitraster von 2,166 MHz verwenden zu können, wird das IS-136-Signal zunächst mit einem Interpolationsfilter 29 mit ganzzahligem, nämlich 11-fachem Interpolationsfaktor auf eine "virtuelle" Abtastfrequenz von 2,138 MHz gebracht. Zu diesem Zweck können effiziente Polyphasenstrukturen in Kombination mit den eingangs bereits genannten M-tel-Bandfiltern verwendet werden.

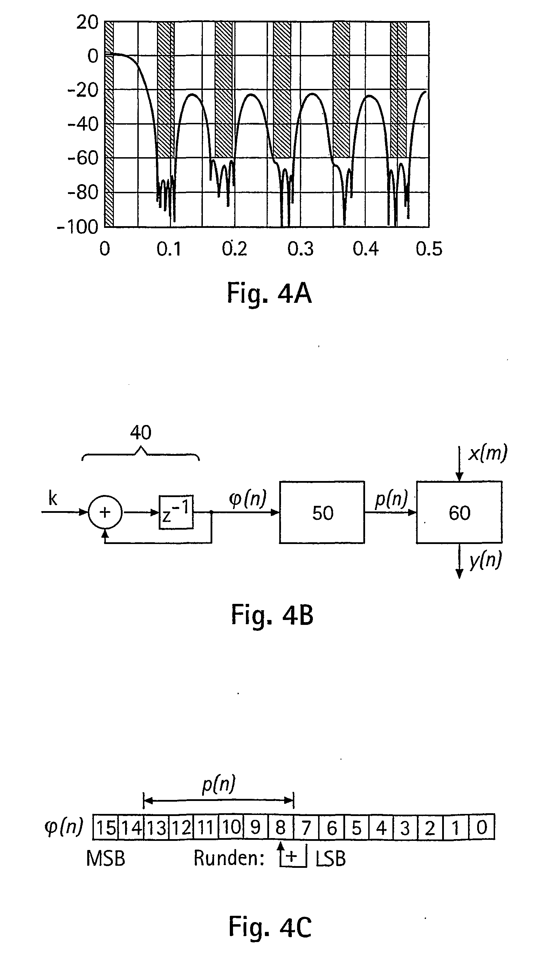

In der Fig.4A ist beispielhaft der normierte Betragsfrequenzgang eines als Interpolationsfilter 29 verwendeten 11-tel-Bandfilters und das vorgegebene Toleranzschema dargestellt. Dadurch wird aufgrund der relativ kleinen Bandbreite des IS-136-Signals von ca. 30 kHz eine ca. 70-fache Überabtastung erreicht.

Der anschließende asynchrone Interpolator 30 kann dann entsprechend schmale Sperrbereiche besitzen, was sich in einer geringen Koeffizientenzahl bemerkbar macht. Im vorliegenden Fall weist der (lineare) Interpolator 30 32 Polyphasen und einen Interpolationsfaktor von k = (13000/6)/(88 x 24,3) = 1,0132 auf, so daß die Abtastfrequenz von 2,138 auf 2,166 MHz gebracht werden kann.

Aufgrund von Systembetrachtungen nach "Wenzel" ist die für den asynchronen Interpolator erforderliche Polyphasenzahl L und damit die zeitliche Auflösung durch

$$L \geq \frac{f_g}{f_A} \cdot \frac{\pi}{\sqrt{3}} \cdot 2^{w - \frac{1}{2}}$$

gegeben, wobei $f_g$ = 15 kHz die Grenzfrequenz des IS-136-Signals und $f_a$ = 2,138 MHz die Abtastfrequenz ist. w = 11 ist die für das Ausgangssignal gewünschte effektive Wortbreite in Bit. Für die gewählten Parameter erhält man L ≈ 18.

Das durch die endliche Sperrdämpfung des Interpolationsfilters resultierende Signal/Rausch-Leistungsverhältnis läßt sich nach "Wenzel" durch die Beziehung

$$S \, / \, N \; \approx \; 2f_g \; \cdot \; \left( \sum_{i=1}^{L-2} \int_{if_A - f_g}^{if_A + f_g} |H(f)|^2 \, df \right)^{-1}$$

abschätzen, wobei H(f) die Übertragungsfunktion des Interpolationsfilters ist. Für die gewählten Parameter kann ein für das IS-136-System ausreichendes Signal/Rausch-Leistungsverhältnis bereits mit einem linearen Interpolator gemäß

$$y(n) \; = \; (1 - p(n)) \cdot x(m - 1) + p(n) \cdot x(m)$$

erreicht werden. Das Gewicht bzw. die Polyphase p(n) kann gemäß Fig.4B in einer Schaltung mit einem Interpolator 60 effizient durch einen Phasenakkumulator 40 endlicher Wortbreite mit nachgeschaltetem Phasendecoder 50 ermittelt werden.

In Fig.4C ist beispielhaft ein Phasendecoder dargestellt, welcher es gestattet, das Abtastfrequenzverhältnis mit einer Auflösung von 16 Bit einzustellen und einen Interpolator mit 32 Polyphasen anzusteuern. Die Polyphase p(n) wird im Falle eines linearen Interpolators als positive Zweierkomplement-Zahl interpretiert und liegt somit in dem Intervall [0;1[.

Ein weiteres schematisches Blockschaltbild zeigt in der Fig.3, wie erfindungsgemäß Funktionsblöcke für die Signalverarbeitungspfade der drei Mobilfunkstandards gemeinsam genutzt werden können, wie dies bereits in der Fig. 1 angedeutet worden ist. Die Signale, die erfindungsgemäß auf das Zeitraster 2,166 MHz gebracht worden sind, werden zunächst einer Offsetkompensationsschaltung 100 zugeführt, in welcher ein Offset, ein Amplitudenfehler oder ein Ungleichgewicht zwischen der I- und der Q-Komponente ausgeglichen wird. In einer anschließenden Interpolator- und Rauschformungsschaltung 200, in welcher der Interpolator einen Interpolationsfaktor von 6 aufweist, wird die Abtastfrequenz von 2,166 MHz auf 13 MHz umgesetzt. Die Signale werden dann einem Digital-/Analog-Umsetzer 300 zugeführt und anschließend einer Rekonstruktionsfilterschaltung 400 übergeben. Wie bereits in Fig. 1 gezeigt, erfolgt schließlich die Modulation in die trägerfrequente Lage mittels eines RF-Modulators 6.

**Patentansprüche**

1.  Signalprozessor zur digitalen Erzeugung von Mobilkommunikations-Sendesignalen, die zu einer Mehrzahl verschiedener Mobilfunkstandards kompatibel sind, enthaltend

    - genau einen Taktfrequenzgenerator (1) für die Signalverarbeitung und/oder D/A-Umsetzung der Sendesignale der verschiedenen Mobilfunkstandards,
    - eine Interpolator-Schaltungsanordnung (8, 20, 28, 29, 30) in jedem Signalverarbeitungspfad eines Mobilfunkstandards für die Umsetzung der Sendesignale auf ein einheitliches Zeitraster,

    **dadurch gekennzeichnet, daß**

    - in dem Signalprozessor mindestens ein Signalverarbeitungspfad eines Mobilfunkstandards enthalten ist, in welchem die Umsetzung nicht durch ganzzahlige Teilung erreichbar ist, in welchem Signalverarbeitungspfad die Interpolator-Schaltungsanordnung aufweist:

        - einen ersten Interpolationsfilter (29), welcher als M-tel-Bandfilter für eine Interpolation um den Faktor M und eine entsprechende Erhöhung der Abtastfrequenz des Sendesignals um den Faktor M ausgebildet ist, wobei M = L ist und L die Anzahl Zweige in der Filterstruktur des ersten Interpolationsfilters (29) ist, und
        - einen zweiten Interpolationsfilter (30; 60), welchem das Ausgangssignal des ersten Interpolationsfilters (29) zugeführt wird und welcher als linearer, asynchroner Polyphasen-Interpolator für eine nicht-ganzzahlige Umsetzung des Sendesignals auf das einheitliche Zeitraster ausgebildet ist.

2.  Signalprozessor nach Anspruch 1,
    **gekennzeichnet durch**

- einen Phasenakkumulator (40) zur Ansteuerung des zweiten Interpolationsfilters (30; 60).

**3.** Signalprozessor nach Anspruch 1 oder 2,
**gekennzeichnet durch**

- eine einheitliche Schnittstelle zur Übergabe der Sendesignale an die Baugruppen zur Umsetzung des Tiefpaßsignals in die trägerfrequente Lage.

**4.** Signalprozessor nach Anspruch 3,
**dadurch gekennzeichnet, daß**

- die Schnittstelle zwei analoge oder digitale Signale in Form einer Normal- und Quadraturkomponente oder Amplituden- und Phasenkomponente beinhaltet.

**5.** Signalprozessor nach einem der vorhergehenden Ansprüche,
**dadurch gekennzeichnet, daß**

- der Taktfrequenzgenerator (1) und die Signalverarbeitungsschaltungen auf einem gemeinsamen Chip angeordnet sind.

**6.** Signalprozessor nach einem der vorhergehenden Ansprüche,
**dadurch gekennzeichnet, daß**

- die Mobilfunkstandards GSM, EDGE und TIA/EIA-136 unterstützt werden und
- der mindestens eine Signalverarbeitungspfad dem Mobilfunkstandard TIA/EIA-136 zugeordnet ist.


**Claims**

**1.** Signal processor for digitally generating mobile communication transmit signals which are compatible with a plurality of different mobile radio standards, containing

- one, and only one, clock frequency generator (1) for the signal processing and/or D/A conversion of the transmit signals of the different mobile radio standards,
- one interpolator circuit arrangement (8, 20, 28, 29, 30) in each signal processing path of a mobile radio standard, for converting the transmit signals into a uniform time reference,

**characterized in that**

- at least one signal processing path of a mobile radio standard is contained in the signal processor, in which signal processing path the conversion cannot be achieved by integer division and the interpolator-circuit arrangement has:

- a first interpolation filter (29), which is configured as an M-th bandpass filter for interpolation by the factor M and a corresponding increase in the sampling frequency of the transmit signal by the factor M, M being equal to L and L being the number of branches in the filter structure of the first interpolation filter (29), and
- a second interpolation filter (30; 60) to which the output signal of the first interpolation filter (29) is fed and which is configured as a linear, asynchronous polyphase interpolator for non-integer conversion of the transmit signal to the uniform time reference.

**2.** Signal processor according to Claim 1, **characterized by**

- a phase accumulator (40) for driving the second interpolation filter (30; 60).

**3.** Signal processor according to Claim 1 or 2, **characterized by**

- a uniform interface for transferring the transmit signals to the modules for converting the low-pass signal to the carrier frequency.

**4.** Signal processor according to Claim 3, **characterized in that**

- the interface contains two analogue or digital signals in the form of a normal component and a quadrature component or amplitude component and phase component.

**5.** Signal processor according to one of the preceding claims, **characterized in that**

- the clock frequency generator (1) and the signal processing circuits are arranged on a common chip.

**6.** Signal processor according to one of the preceding claims, **characterized in that**

- the mobile radio standards GSM, EDGE and TIA/EIA-136 are supported and
- the at least one signal processing path is allocated to the mobile radio standard TIA/EIA-136.

**Revendications**

**1.** Processeur de signal destiné à générer numériquement des signaux d'émission de communication de téléphonie mobile, qui sont compatibles avec une pluralité de normes de téléphonie mobile différentes, le processeur de signal comprenant

- exactement un générateur de fréquence d'horloge (1) pour le traitement de signal et/ou la conversion numérique/analogique des signaux d'émission des différentes normes de téléphonie mobile,
- un circuit interpolateur (8, 20, 28, 29, 30) dans chaque voie de traitement de signal d'une norme de téléphonie mobile pour la conversion des signaux d'émission en une trame temporelle unitaire,

**caractérisé en ce que**

- le processeur de signal comprend au moins une voie de traitement de signal d'une norme de téléphonie mobile, dans laquelle la conversion ne peut pas être obtenue par division par un nombre entier, et dans laquelle le circuit interpolateur comporte :

- un premier filtre d'interpolation (29) qui est conformé en filtre de bande d'ordre M pour une interpolation du facteur M et une augmentation correspondante de la fréquence d'échantillonnage du signal d'émission du facteur M, où M = L et L est le nombre de branches dans la structure de filtrage du premier filtre d'interpolation (29), et
- un deuxième filtre d'interpolation (30 ; 60), auquel est amené le signal de sortie du premier filtre d'interpolation (29) et qui est conformé en interpolateur polyphasé asynchrone linéaire pour une conversion en nombre non entier du signal d'émission en la trame temporelle unitaire.

**2.** Processeur de signal selon la revendication 1, **caractérisé par**

- un accumulateur de phase (40) destiné à commander le deuxième filtre d'interpolation (30 ; 60).

**3.** Processeur de signal selon la revendication 1 ou 2, **caractérisé par** une interface unitaire destinée à transférer les signaux d'émission aux modules de conversion du signal passe-bas dans la position de la fréquence porteuse.

**4.** Processeur de signal selon la revendication 3, **caractérisé en ce que** l'interface contient deux signaux analogiques ou numériques se présentant sous la forme d'une composante normale et d'une composante en quadrature ou de composantes d'amplitude et de phase.

**5.** Processeur de signal selon l'une des revendications précédentes, **caractérisé en ce que**

- le générateur de fréquence d'horloge (1) et le circuit de traitement de signal sont disposés sur une même puce.

**6.** Processeur de signal selon l'une des revendications précédentes, **caractérisé en ce que**

- il supporte les normes de téléphonie mobile GSM, EDGE et TIA/EIA-136 et

- l'au moins une voie de traitement de signal est associée à la norme de téléphonie mobile TIA/EIA-136.

Fig. 1

2a

270.83 kbit/s

270.83 kHz    2.166 MHz    2.166 MHz    2.166 MHz

**Fig. 2A**

2b

812.5 kbit/s

270.83 kHz    270.83 kHz    270.83 kHz    270.83 kHz    2.166 MHz

**Fig. 2B**

2c

48.6 kbit/s

24.3 kHz    24.3 kHz    24.3 kHz    194.4 kHz    2.138 MHz    2.166 MHz

**Fig. 2C**

Fig. 3

EP 1 317 830 B1

Fig. 4A

Fig. 4B

Fig. 4C